# EUROPEAN PATENT APPLICATION

(11) **EP 2 441 579 A2**
(43) Date of publication of application: **18.04.2012**
(21) Application number: 11185298.4
(22) Date of filing: 14.10.2011
(51) Int. Cl.: B32B 7/00, G06F 3/045

(54) **Manufacturing method of touch panel and touch panel**

(30) Priority: 15.10.2010 JP 2010232388
(71) Applicant: Hitachi Displays, Ltd., Mobara-shi Chiba (JP); Panasonic Liquid Crystal Display Co., Ltd., Shikama-ku, Himeji-shi Hyogo 672-8033 (JP)
(72) Inventor: Kobayashi, Setsuo, Chiba-ken, 297-8622 (JP); Sekiguchi, Shinji, Chiba-ken, 297-8622 (JP); Mishima, Yasuyuki, Chiba-ken, 297-8622 (JP)
(74) Representative: Beetz & Partner

(57) **Abstract**

Disclosed is a manufacturing method of a touch panel, comprising the steps of: preparing a solution containing a silane coupling agent; applying the solution to a surface of a first substrate having a hydroxy group on the surface thereof: chemically bonding the silane coupling agent to the surface of the first substrate to form convex portions each having a silicon oxide backbone and an organic functional group in the structure thereof; and disposing a second substrate spaced apart from the first substrate to face the surface having the convex portions formed thereon of the first substrate.

## Description

### BACKGROUND OF THE INVENTION

### 1. Field of the Invention

The present invention relates to a manufacturing method of a touch panel and also relates to a touch panel.

### 2. Description of the Related Art

As touch panels, a resistive touch panel, a capacitive touch panel, and a capacitive coupling touch panel which is designed to work with a stylus have been known (see JP 2010-113516 A).

Further, JP 2008-155387 A proposes a laminate in which a transparent conductive film is formed on one surface of a resin molding obtained by curing a photopolymerizable composition and having a thickness of from 0.1 to 1 mm, wherein a surface of the resin molding is a surface on which an unevenness having an anti-Newton ring function is formed and a surface roughness (Ra) thereof is from 50 to 150 nm as determined according to JIS B0601:2001.

### SUMMARY OF THE INVENTION

In a resistive touch panel, the generation of Newton rings caused by the adhesion of two substrates disposed to face each other through an air layer is improved by the invention disclosed in JP 2008-155387 A. However, in JP 2008-155387 A, the formed unevenness having an anti-Newton ring function is large to such an extent that the presence of the unevenness on a display screen can be recognized. For example, when the touch panel is used in combination with a display device such as a liquid crystal display, the touch panel has a problem that the display quality of the display screen displayed by the liquid crystal display is decreased.

In the case where the touch panel is used in combination with a display device, in order to suppress the generation of Newton rings while maintaining the display quality of the display screen displayed by the display device, it is necessary to form the unevenness having an anti-Newton ring function such that the unevenness is small so that the unevenness cannot be recognized, and also it is necessary to establish a method of forming the unevenness.

An object of the present invention is to provide a touch panel which is capable of suppressing the generation of Newton rings and maintaining the display quality of an image displayed by a display device even in the case where the touch panel is used in combination with a display device. Another object of the present invention is to provide a manufacturing method of the touch panel.

The above-described objects and other objects, and also new features of the present invention will become apparent from the description and accompanying drawings of the present specification.

A manufacturing method of a touch panel according to the present invention for achieving the above object includes the steps of: preparing a solution containing a silane coupling agent; applying the solution to a surface of a first substrate having a hydroxy group on the surface thereof: chemically bonding the silane coupling agent to the surface of the first substrate to form convex portions each having a silicon oxide backbone and an organic functional group in the structure thereof; and disposing a second substrate spaced apart from the first substrate to face the surface having the convex portions formed thereon of the first substrate.

Further, the first substrate may be a glass substrate. Further, the silane coupling agent may be contained in the solution in an amount of from 0.1 to 0.01 wt%. Further, the first substrate may be provided with a first electrode and a second electrode, each of which is composed of a plurality of wiring lines, and the second substrate may be provided with a dielectric film on the surface thereof facing the first substrate. Further, the manufacturing method may further include the steps of: applying the solution containing a silane coupling agent to the surface of the dielectric film; and chemically bonding the silane coupling agent to the surface of the dielectric film to form convex portions each having a silicon oxide backbone and an organic functional group in the structure thereof. Further, the dielectric film may have a resistance of from 10⁶ to 10¹² Ω.cm.

Further, the first substrate may be provided with a first conductive film composed of a plurality of wiring lines formed on the surface thereof facing the second substrate, and the second substrate may be provided with a second conductive film formed on the surface thereof facing the first substrate, and the manufacturing method may further include the steps of: applying the solution containing a silane coupling agent to the surface of the second substrate; and chemically bonding the silane coupling agent to the surface of the second substrate to form convex portions each having a silicon oxide backbone and an organic functional group in the structure thereof.

Further, a touch panel according to the present invention includes: a first substrate having a hydroxy group on the surface thereof; and a second substrate facing and spaced apart from the first substrate, wherein the first substrate has convex portions each having a silicon oxide backbone and an organic functional group in the structure thereof formed by chemically bonding a silane coupling agent to the surface facing the second substrate of the first substrate.

Further, the first substrate may be a glass substrate. Further, the first substrate may be provided with a first electrode and a second electrode, each of which is composed of a plurality of wiring lines, and the second substrate may be provided with a dielectric film on the surface thereof facing the first substrate. Further, the first substrate may be provided with a first conductive film composed of a plurality of wiring lines formed on the surface thereof facing the second substrate; and the second substrate may be provided with a second conductive film formed on the surface thereof facing the first substrate. Further, the dielectric film may have a resistance of from 10⁶ to 10¹² Ω.cm.

According to the present invention, a touch panel which is capable of suppressing the generation of Newton rings and maintaining the display quality of an image displayed by a display device even in the case where the touch panel is used in combination with a display device, and a manufacturing method of the touch panel are provided. Other advantages of the present invention will become apparent from the description of the entirety of the specification.

### BRIEF DESCRIPTION OF THE DRAWINGS

FIG. 1 is a view illustrating a manner of chemically bonding a silane coupling agent to an inorganic material.
FIG. 2 is a partial cross-sectional view of a touch panel according to a first embodiment.
FIG. 3 is a partial cross-sectional view of the touch panel according to the first embodiment when a surface of the touch panel is pressed down by a resin pen.
FIG. 4 is a partial enlarged view of the IV region in FIG. 3.
FIG. 5 is a partial cross-sectional view of a touch panel according to a second embodiment.
FIG. 6 is a partial enlarged view of the VI region in FIG. 5.
FIG. 7 is a partial cross-sectional view of the touch panel according to the second embodiment when a surface of the touch panel is pressed down by a resin pen.
FIG. 8 is a partial enlarged view of the VIII region in FIG. 7.
FIG. 9 is a partial cross-sectional view of a touch panel according to a third embodiment.
FIG. 10 is a partial cross-sectional view of the touch panel according to the third embodiment when a surface of the touch panel is pressed down by a resin pen.
FIG. 11 is a partial enlarged view of the XI region in FIG. 10.
FIG. 12 is a partial cross-sectional view of a liquid crystal display device using the touch panel according to the first embodiment.

### DETAILED DESCRIPTION OF THE INVENTION

The manufacturing method of a touch panel according to the present embodiment includes the steps of: preparing a solution containing a silane coupling agent; applying the solution containing a silane coupling agent to a surface of a first substrate having a hydroxy group on the surface thereof: chemically bonding the silane coupling agent to the surface of the first substrate to form convex portions each having a silicon oxide backbone and an organic functional group in the structure thereof; and disposing a second substrate spaced apart from the first substrate to face the surface having the convex portions formed thereon of the first substrate.

First, the step of preparing a solution containing a silane coupling agent will be described. The silane coupling agent has two functional groups having different reactivity in each molecule. The silane coupling agent is represented by the following general formula (1).

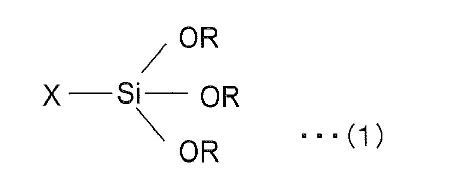

In the formula (1), X is a reactive group which chemically bonds to an organic material, and examples thereof include, though not limited thereto, an amino group, a vinyl group, an epoxy group, a methacrylic group, and a mercapto group. Further, the group -OR in the formula (1) is a reactive group which chemically bonds to an inorganic material such as glass or a metal, and examples thereof include, though not limited thereto, a methoxy group, an ethoxy group, and a halogen group such as chlorine.

Further, specific examples of the silane coupling agent which can be applied to the present embodiment include vinyltrichlorosilane, vinyltrimethoxysilane, vinyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldiethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, N-(β-aminoethyl)-γ-aminopropylmethyldiethoxysilane, N-(β-aminoethyl)-γ-aminopropyltrimethoxysilane, γ-aminopropyltriethoxysilane, N-phenyl-γ-aminopropyltrimethoxysilane, γ-mercaptopropyltrimethoxysilane, γ-chloropropyltrimethoxysilane, and γ-ureidopropyltriethoxysilane, however, silane coupling agent is not limited thereto. Further, in the solution containing a silane coupling agent to be used in the manufacturing method of a touch panel according to the present embodiment, one kind of silane coupling agent may be contained alone or plural kinds of silane coupling agents having a different composition may be contained. As a solvent contained in the solution containing a silane coupling agent, an ester-based solvent such as ethyl acetate or butyl acetate, a hydrocarbon-based solvent such as toluene or xylene is used.

Conventionally, the silane coupling agent was generally used by being dispersed in a dilute aqueous solution. By adding the silane coupling agent to a solvent containing water, a silanol group is easily formed in the molecule. Then, by performing a condensation reaction of the silanol groups of the molecules of the silane coupling agent, the formation of a siloxane bond is accelerated. As a result, a film derived from the silane coupling agent having a large molecular structure can be formed, and a uniform surface is formed. However, in the manufacturing method of a touch panel according to the present embodiment, it is preferred to randomly form minute convex portions on the surface with the silane coupling agent rather than to form a uniform surface. Therefore, an alkylsilyl group of the silane coupling agent is converted into a silanol group due to the contamination of the solvent with water, and the size of the convex portion formed by the condensation reaction occurring between the molecules of the silane coupling agent is increased, and also the size of the convex portion varies depending on the degree of progression of the condensation reaction. Therefore, the contamination of the solvent with water is not preferred in the manufacturing method of a touch panel according to the present embodiment.

Accordingly, the water content in the solvent is preferably as low as possible. The amount of water contained in the solvent is preferably from 0 wt% to 2.0 wt%, more preferably from 0 wt% to 1.0 wt%, and particularly preferably from 0 wt% to 0.5 wt%.

A prepared solvent in an amount of from 99.0 to 99.99 parts by weight and a silane coupling agent in an amount of from 1.0 to 0.01 parts by weight are mixed so that the total amount becomes 100 parts by weight, whereby the solution containing a silane coupling agent is prepared. The preparation of the solution containing a silane coupling agent is preferably performed as follows. A solvent is added to a container such as a beaker in advance, and a silane coupling agent is gradually added thereto while stirring the solvent, followed by further stirring the resulting mixture for about 30 minutes after completion of the addition of the silane coupling agent. If an insoluble substance or a floating substance is significantly observed in the solution after stirring, it is preferred to remove the insoluble substance or the floating substance in advance, for example it is preferred to remove the insoluble substance or the floating substance in advance by performing a circulation filtration treatment using a cartridge filter having a pore diameter of 0.5 µm or less.

The silane coupling agent added to the solution is preferably contained in the solution in an amount of from 0.1 to 0.01 wt%. By incorporating the silane coupling agent in the solution in an amount of from 0.1 to 0.01 wt%, an effect of suppressing Newton rings is further increased. If the amount thereof is less than 0.01 wt%, the effect of suppressing Newton rings is decreased, and the amount thereof exceeding 0.1 wt% is not preferred from the viewpoint of cost.

Subsequently, the step of applying the solution containing a silane coupling agent to a surface of a first substrate having a hydroxy group on the surface thereof will be described. Examples of a material having a hydroxy group on the surface thereof include inorganic materials such as glass, a metal, and a silicon single crystal. It is preferred that the surface of the first substrate is subjected to UV cleaning in advance. By performing UV cleaning, an organic substance or the like adhering to the surface of the first substrate can be removed and the convex portions are homogeneously formed in this step.

The application of the solution containing a silane coupling agent may be performed using a spin coater or a roll coater, or by spray coating. Further, a method of applying the solution containing a silane coupling agent is not limited to the above-described methods.

Subsequently, the step of applying the solution containing a silane coupling agent to a surface of the first substrate having a hydroxy group on the surface thereof and the step of chemically bonding the silane coupling agent to the surface of the first substrate to form convex portions each having a silicon oxide backbone and an organic functional group in the structure thereof will be described.

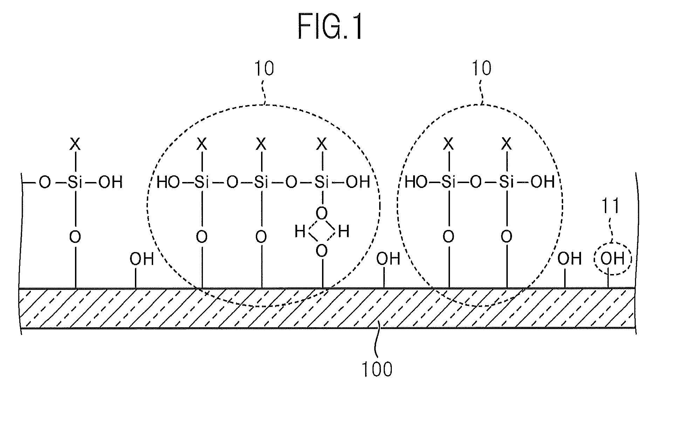

FIG. 1 is a view illustrating a manner of chemically bonding a silane coupling agent to a first substrate 100. As shown in FIG. 1, each convex portion 10 formed by chemically bonding the silane coupling agent to the first substrate 100 made of an inorganic material has a silicon oxide backbone (-Si-O-) and an organic functional group (X), both of which are derived from the structure of the silane coupling agent, in the structure thereof. A reactive group (the -OR group in the formula (1) ) contained in the molecule of the silane coupling agent reacts with water in air to form a hydroxy group (a silanol group) . A part of the hydroxy group formed in the molecule of the silane coupling agent undergoes a condensation reaction with a part of the hydroxy group formed in another molecule of the silane coupling agent. Further, another part of the hydroxy group formed in the molecule of the silane coupling agent adheres to the surface of the inorganic material at the position of a hydroxy group 11 present thereon to form a hydrogen bond and is chemically bonded thereto by dehydration condensation.

The step of forming the convex portions 10 is performed by air drying the solution containing a silane coupling agent applied in the step of applying the solution to a surface of the first substrate 100 to evaporate the solvent in the solution and also to allow a reaction in which the silane coupling agent and the surface of the first substrate 100 are chemically bonded to each other to proceed.

Further, in the step of forming the convex portions 10, by not only performing air drying, but also performing a heating treatment, the reaction in which the silane coupling agent and the surface of the first substrate 100 are chemically bonded to each other is accelerated, therefore, it is preferred to perform a heating treatment additionally. For example, the heating treatment is performed preferably under the condition of a temperature of from 140°C to 50°C and a holding time of from 1 minute to 5 minutes, more preferably under the condition of a temperature of from 110°C to 60°C and a holding time of from 1 minute to 5 minutes.

Finally, the step of disposing a second substrate 200 spaced apart from the first substrate 100 to face the surface having the convex portions 10 formed thereon of the first substrate 100 will be described. The step of disposing a second substrate 200 spaced apart from the first substrate 100 to face the surface having the convex portions 10 formed thereon of the first substrate 100 is realized by forming dot spacers on the surface having the convex portions 10 formed thereon of the first substrate 100 and disposing the second substrate 200 on the surface of the first substrate 100 so as to be superimposed on the dot spacers.

Further, the step of disposing a second substrate 200 spaced apart from the first substrate 100 to face the surface having the convex portions 10 formed thereon of the first substrate 100 is also realized by directly superimposing the second substrate 200 on the convex portions 10 each having a silicon oxide backbone and an organic functional group in the structure thereof and formed on the first substrate 100 by chemically bonding the silane coupling agent thereto in place of the above-described dot spacers.

Hereinafter, the manufacturing method of a touch panel according to the present embodiment and examples in which the manufactured touch panel is applied will be specifically described.

### [First Embodiment]

A manufacturing method of a touch panel 1 according to the present embodiment is applied to a capacitive touch panel, which can work with a stylus and can detect multiple points, and a so-called resistive touch panel. The touch panel 1 according to the first embodiment is a capacitive touch panel which can work with a stylus and can detect multiple points.

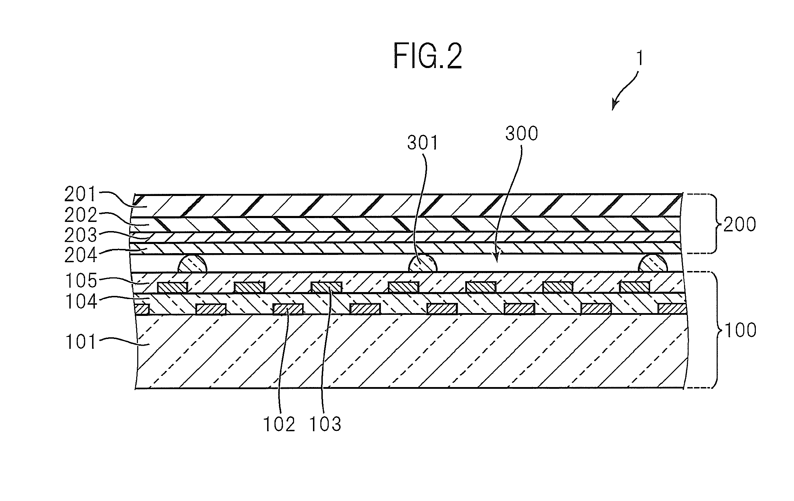

FIG. 2 is a partial cross-sectional view of a touch panel 1 according to the first embodiment. The touch panel 1 according to the first embodiment manufactured by the manufacturing method of the touch panel 1 according to the present embodiment includes a first substrate 100 having a hydroxy group on a surface thereof and a second substrate 200 that faces and is spaced apart from the first substrate 100, and also has convex portions 10 each having a silicon oxide backbone and an organic functional group in the structure thereof and formed on a surface facing the second substrate 200 of the first substrate 100 by chemically bonding the silane coupling agent thereto.

As the first substrate 100 in the touch panel 1 according to the first embodiment, a transparent substrate (glass substrate) 101 is used. On the transparent substrate 101, a first electrode 102 composed of a plurality of wiring lines and a second electrode 103 composed of a plurality of wiring lines are provided. A first insulating film 104 and a second insulating film 105 are formed as passivation films for protecting the first electrode 102 and the second electrode 103, respectively. Further, the first insulating film 104 and the second insulating film 105 are each formed from SiO₂, phosphorus silicate glass, or the like by a CVD (chemical vapor deposition) method or a precipitation method.

On the topmost surface of the first substrate 100, that is, on the surface of the second insulating film 105, the convex portions 10 each having a silicon oxide backbone and an organic functional group in the structure thereof are formed by chemically bonding the silane coupling agent thereto.

A manufacturing method of the touch panel 1 according to the first embodiment will be described. First, ethyl acetate in an amount of 99.9 wt% was weighed in a beaker and y-aminopropyltriethoxysilane (KBE-903, manufactured by Shin-Etsu Chemical Co., Ltd.) in an amount of 0.1 wt% was gradually added thereto while stirring ethyl acetate. After the entire amount of γ-aminopropyltriethoxysilane was added to ethyl acetate, stirring was further performed for 30 minutes. After completion of the stirring, a circulation filtration treatment using a cartridge filter having a pore diameter of 0.5 µm or less was performed although an insoluble substance, a floating substance, or the like was not observed in the solution. In this manner, the solution containing a silane coupling agent was prepared.

The surface of the first substrate 100, on which the convex portions 10 are to be formed, was subjected to UV cleaning in advance with Deep UV (far-ultraviolet light) for 200 seconds. By performing the UV cleaning, an organic substance or the like adhering to the surface of the first substrate 100 can be removed, and the convex portions 10 are homogeneously formed in the step of forming the convex portions 10.

To the surface of the first substrate 100 subjected to UV cleaning in advance as described above, the prepared solution containing a silane coupling agent was applied using a spin coater at 500 rpm for 15 seconds. Thereafter, a heating treatment was performed using a hot plate at 60°C for 1 minute to evaporate the solvent (ethyl acetate) contained in the solution containing a silane coupling agent and also to allow a reaction in which the silane coupling agent and the surface of the first substrate 100 are chemically bonded to each other to proceed, whereby the convex portions 10 were formed on the first substrate 100. The formed convex portions 10 each had a hemispherical shape, a height of 20 µm, and a diameter of 60 µm. The convex portions 10 were randomly disposed on the surface of the first substrate 100 and could not be visually recognized. In consideration of the case where the touch panel 1 according to the first embodiment is used in combination with a display panel, the height of the convex portion 10 is preferably 0.1 mm or less.

On the first substrate 100 having the convex portions 10 formed thereon, dot spacers 301 were further disposed. The dot spacers 301 function as spacers for forming an air layer 300 between the first substrate 100 and the second substrate 200. The dot spacers 301 are regularly disposed at predetermined intervals on the surface of the first substrate 100. The dot spacers 301 used here in the touch panel 1 according to the first embodiment are transparent beads having a diameter of 0.2 mm. That is, the second substrate 200 facing the surface having the convex portions 10 formed thereon of the first substrate 100 is disposed spaced at a distance of 0.2 mm apart from the first substrate 100.

As shown in FIG. 2, the second substrate 200 is configured to include a dielectric film 204 coming into contact with the dot spacers 301, a transparent elastic film 202 formed from a transparent elastic body, a film 203 for bonding the dielectric film 204 to the transparent elastic film 202, and a front window for protecting the touch panel 1 from mechanical damage.

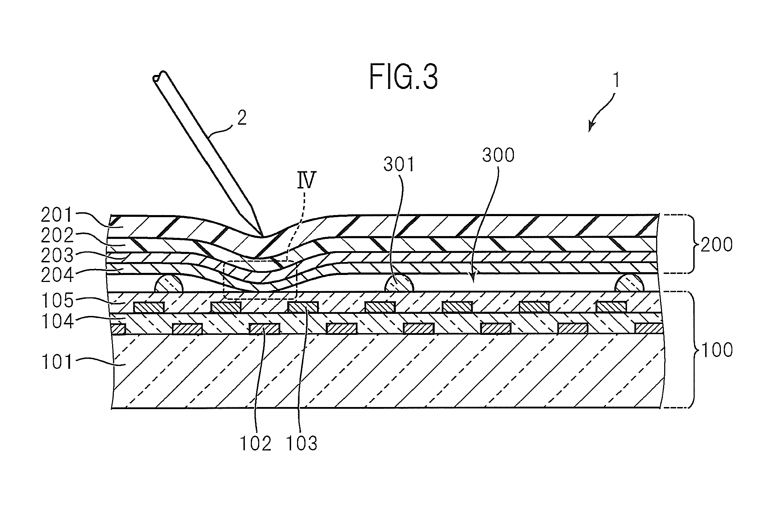

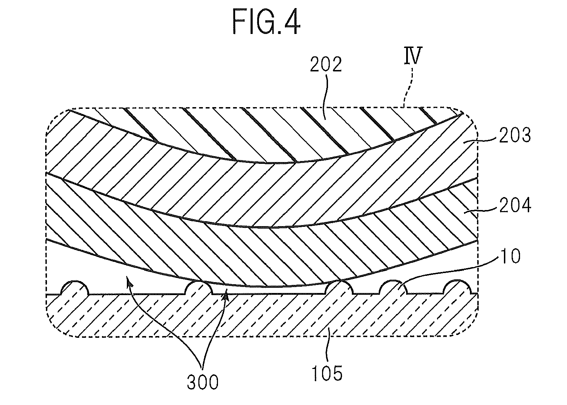

FIG. 3 is a partial cross-sectional view of the touch panel 1 according to the first embodiment when a surface of the touch panel is pressed down by a resin pen 2. FIG. 4 is a partial enlarged view of the IV region in FIG. 3.

In the touch panel 1 having a capacitive coupling system according to the first embodiment, when the surface of the second substrate 200 is pressed down by the resin pen 2, the dielectric film 204 is also pressed down on the side of the first substrate 100. When the thus pressed-down dielectric film 204 comes into contact with the convex portion 10, a capacitance (capacitor) is formed. Then, a minute current flows through the capacitor. A change in the minute current flowing is detected by the first electrode 102 and the second electrode 103 provided for the first substrate 100, and the location where the dielectric film 204 came into contact with the convex portion 10 is detected.

In the touch panel 1 having a capacitive coupling system according to the first embodiment, when the surface of the second substrate 200 is pressed down by the resin pen 2, the dielectric film 204 is also pressed down on the side of the first substrate 100 so as to come into contact with the first substrate 100. As shown in FIG. 4, in a contact region between the dielectric film 204 and the first substrate 100, the entire surface of the dielectric film 204 does not come into contact with the first substrate 100 due to the presence of the convex portions 10, and an air layer 300 is formed in a part of the contact region. Due to the formation of the air layer 300, the first substrate 100 and the second substrate 200 do not adhere to each other, and therefore, the generation of Newton rings is suppressed.

Further, the dielectric film 204 may be any as long as the film forms a capacitor, and the dielectric film 204 preferably has a resistance of from 10⁶ to 10¹² Ω·cm. That is, the dielectric film 204 is not necessarily a material having a low resistance such as a metal, and may be an organic material as long as the material satisfies the requirement that the resistance of the material is from 10⁶ to 10¹² Ω.cm.

Further, the manufacturing method of the touch panel 1 according to the first embodiment may further include the steps of: applying the solution containing a silane coupling agent to the surface of the dielectric film 204; and chemically bonding the silane coupling agent to the surface of the dielectric film 204 to form the convex portions 10 each having a silicon oxide backbone and an organic functional group in the structure thereof. By further including these steps, the touch panel 1 according to the first embodiment is provided with the convex portions 10 on the surface facing the first substrate 100 of the dielectric film 204.

Incidentally, also in the case where the dielectric film 204 is formed from an organic material, the convex portions 10 can be provided for the surface facing the first substrate 100 of the dielectric film 204. This is because, although the surface of a so-called organic material such as polyimide or an acrylic material does not theoretically have a hydroxy group, a reactive site formed by an oxidative decomposition reaction by oxygen in air, oxidation of a residual double bond, or the like reacts with the silane coupling agent.

In the case where the surface of the second substrate 200 is pressed down by the resin pen 2, in a contact region between the dielectric film 204 and the first substrate 100, due to the formation of the convex portions 10 on each of the first substrate 100 and the second substrate 200, an air layer 300 is formed more as compared with the case where the convex portions 10 are formed only on the first substrate 100. Accordingly, the first substrate 100 and the second substrate 200 are further less likely to adhere to each other, and therefore, the generation of Newton rings is suppressed.

The touch panel 1 according to the first embodiment was used by being integrated into a liquid crystal display device, and it was confirmed whether the quality of a display screen displayed by the display device was decreased. As a result, a decrease in the quality was not observed.

### [Second Embodiment]

A touch panel 1 according to a second embodiment is manufactured by a manufacturing method similar to that of the touch panel according to the first embodiment except that the dot spacers 301 are not provided for the touch panel 1 according to the first embodiment.

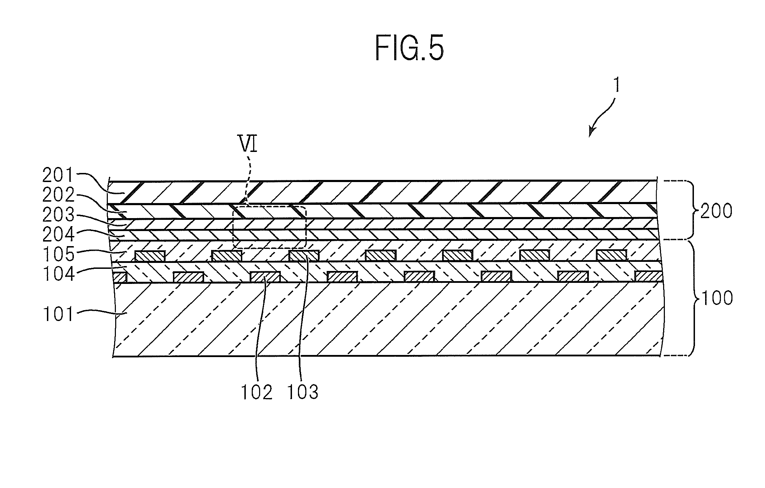

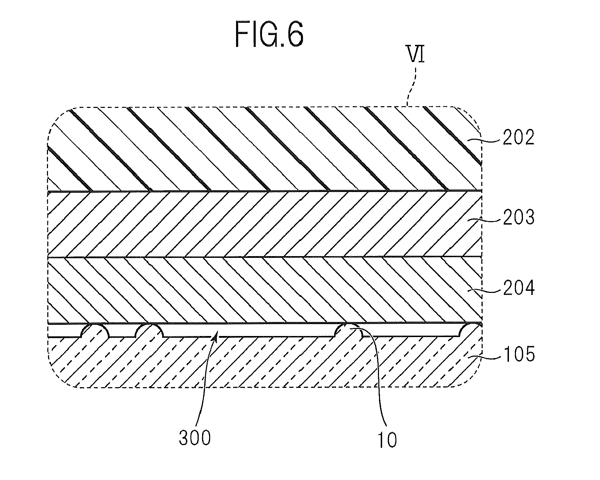

FIG. 5 is a partial cross-sectional view of the touch panel 1 according to the second embodiment. FIG. 6 is a partial enlarged view of the VI region in FIG. 5. As shown in FIG. 5 and FIG. 6, in the touch panel 1 according to the second embodiment, convex portions 10 function as spacers, and an air layer 300 due to the height of the convex portion 10 is formed between a first substrate 100 and a second substrate 200.

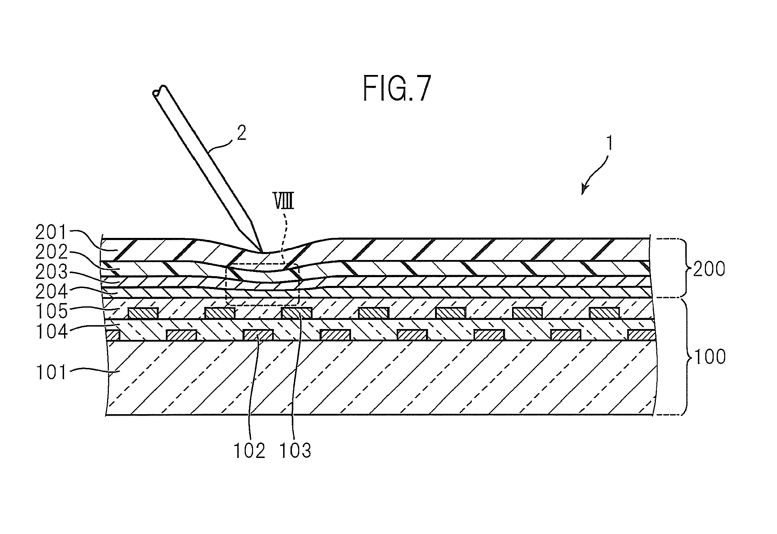

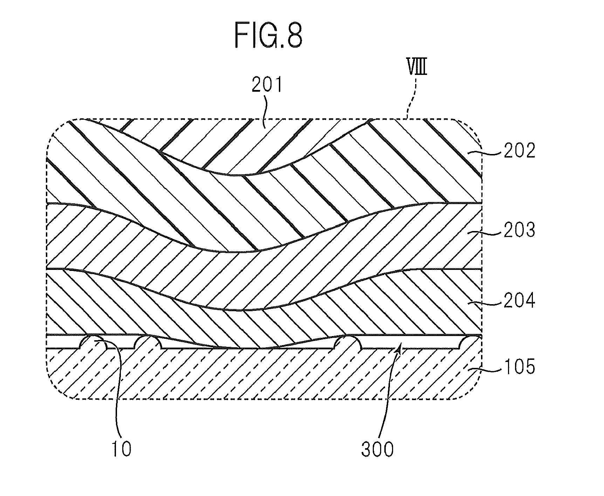

FIG. 7 is a partial cross-sectional view of the touch panel 1 according to the second embodiment when a surface of the touch panel is pressed down by a resin pen 2. FIG. 8 is a partial enlarged view of the VIII region in FIG. 7.

In the touch panel 1 having a capacitive coupling system according to the second embodiment, when the surface of the second substrate 200 is pressed down by the resin pen 2, a dielectric film 204 is also pressed down on the side of the first substrate 100. When the pressed-down dielectric film 204 comes into contact with a second insulating film 105, a capacitance (capacitor) accumulated in the dielectric film 204 is changed. Then, a minute current flowing through the capacitor is also changed. The change is detected by a first electrode 102 and a second electrode 103 provided for the first substrate 100, and the location where the dielectric film 204 came into contact with the convex portion 10 is detected.

As shown in FIG. 8, in a contact region between the dielectric film 204 and the first substrate 100, the entire surface of the dielectric film 204 does not come into contact with the first substrate 100 due to the presence of the convex portions 10, and an air layer 300 is formed in a part of the contact region. Due to the formation of the air layer 300, the first substrate 100 and the second substrate 200 do not adhere to each other, and therefore, the generation of Newton rings is suppressed.

Further, also in the touch panel 1 according to the second embodiment, the dielectric film 204 may be any as long as the film forms a capacitor, and the dielectric film 204 preferably has a resistance of from 10⁶ to 10¹² Ω·cm. That is, the dielectric film 204 is not necessarily a material having a low resistance such as a metal, and may be an organic material as long as the material satisfies the requirement that the resistance of the material is from 10⁶ to 10¹² Ω.cm.

Further, the manufacturing method of the touch panel 1 according to the second embodiment may also further include the steps of: applying the solution containing a silane coupling agent to the surface of the dielectric film 204; and chemically bonding the silane coupling agent to the surface of the dielectric film 204 to form the convex portions 10 each having a silicon oxide backbone and an organic functional group in the structure thereof. By further including these steps, the touch panel 1 according to the second embodiment is provided with the convex portions 10 on the surface facing the first substrate 100 of the dielectric film 204. In the case where the surface of the second substrate 200 is pressed down by the resin pen 2, in a contact region between the dielectric film 204 and the first substrate 100, due to the formation of the convex portions 10 on each of the first substrate 100 and the second substrate 200, an air layer 300 is formed more as compared with the case where the convex portions 10 are formed only on the first substrate 100. Accordingly, the first substrate 100 and the second substrate 200 are further less likely to adhere to each other, and therefore, the generation of Newton rings is suppressed.

The touch panel 1 according to the second embodiment was integrated into a liquid crystal display device, and it was confirmed whether the quality of a display screen displayed by the display device was decreased. As a result, a decrease in the quality was not observed.

### [Third Embodiment]

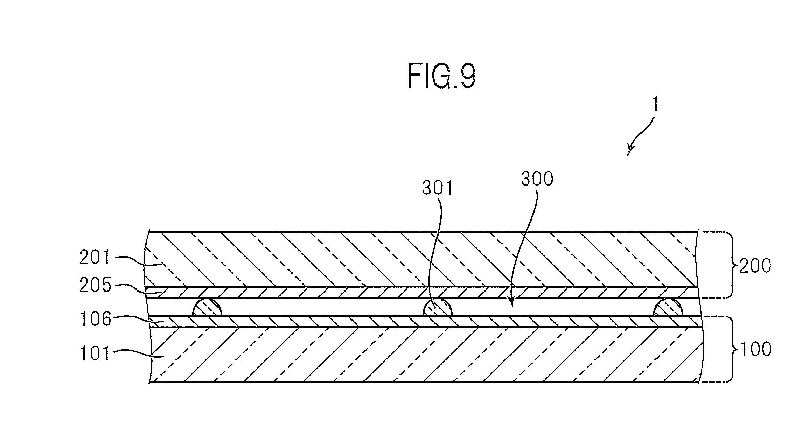

A touch panel 1 according to a third embodiment is a resistive touch panel. FIG. 9 is a partial cross-sectional view of the touch panel 1 according to the third embodiment. The touch panel 1 according to the third embodiment manufactured by the manufacturing method of the touch panel 1 according to the present embodiment includes a first conductive film 106 composed of a plurality of wiring lines formed on a surface facing a second substrate 200 of a first substrate 100 and also includes a second conductive film 205 formed on a surface facing the first substrate 100 of the second substrate 200.

As the first substrate 100 in the touch panel 1 according to the third embodiment, a transparent substrate (glass substrate) 101 is used. On the transparent substrate 101, the first conductive film 106 composed of a plurality of wiring lines is provided. On the topmost surface of the first substrate 100, that is, on the surface of the first conductive film 106, the convex portions 10 each having a silicon oxide backbone and an organic functional group in the structure thereof are formed by chemically bonding the silane coupling agent thereto.

A manufacturing method of the touch panel 1 according to the third embodiment will be described. First, ethyl acetate in an amount of 99.99 wt% was weighed in a beaker and y-aminopropyltriethoxysilane (KBE-903, manufactured by Shin-Etsu Chemical Co., Ltd.) in an amount of 0.01 wt% was gradually added thereto while stirring ethyl acetate. After the entire amount of γ-aminopropyltriethoxysilane was added to ethyl acetate, stirring was further performed for 30 minutes. After completion of the stirring, a circulation filtration treatment using a cartridge filter having a pore diameter of 0. 5 µm or less was performed although an insoluble substance, a floating substance, or the like was not observed in the solution. In this manner, the solution containing a silane coupling agent was prepared.

The first conductive film 106, on which the convex portions 10 are to be formed, is formed from a transparent conductive material such as ITO (indium tin oxide) , and on the surface thereof, a hydroxy group for chemically bonding to the silane coupling agent is present. The surface of the first conductive film 106 was subjected to UV cleaning in advance with Deep UV (far-ultraviolet light) for 200 seconds. It is preferred that the surface of the first conductive film 106, on which the convex portions 10 are to be formed, is subjected to UV cleaning in advance. By performing the UV cleaning, an organic substance or the like adhering to the surface of the first conductive film 106 can be removed, and the convex portions 10 are homogeneously formed in the step of forming the convex portions 10.

To the surface of the first conductive film 106 subjected to UV cleaning in advance as described above, the prepared solution containing a silane coupling agent was applied using a spin coater at 1500 rpm for 30 seconds. Thereafter, a heating treatment was performed using a hot plate at 60°C for 1 minute to evaporate the solvent (ethyl acetate) contained in the solution containing a silane coupling agent and also to allow a reaction in which the silane coupling agent and the surface of the first conductive film 106 are chemically bonded to each other to proceed, whereby the convex portions 10 were formed on the first substrate 100. The formed convex portions 10 each had a hemispherical shape, a height of 20 µm, and a width in the planar direction of 60 µm. The convex portions 10 were randomly disposed on the surface of the first substrate 100 and could not be visually recognized. In consideration of the case where the touch panel 1 according to the third embodiment is used in combination with a display panel, the height of the convex portion 10 is preferably 0.1 mm or less.

On the first substrate 100 having the convex portions 10 formed thereon, dot spacers 301 were further disposed. The dot spacers 301 function as spacers for forming an air layer 300 between the first substrate 100 and the second substrate 200. The dot spacers 301 are regularly disposed at predetermined intervals on the surface of the first substrate 100. The dot spacers 301 used here in the touch panel 1 according to the third embodiment are transparent beads having a diameter of 0.3 mm. That is, the second substrate 200 facing the surface having the convex portions 10 formed thereon of the first substrate 100 is disposed spaced at a distance of 0.3 mm apart from the first substrate 100.

As shown in FIG. 9, the second substrate 200 is configured to include a second conductive film 205 which comes into contact with the dot spacers 301 and a flexible transparent substrate 201. The second conductive film 205 is also formed from a transparent conductive material such as ITO (indium tin oxide) in the same manner as the first conductive film 106.

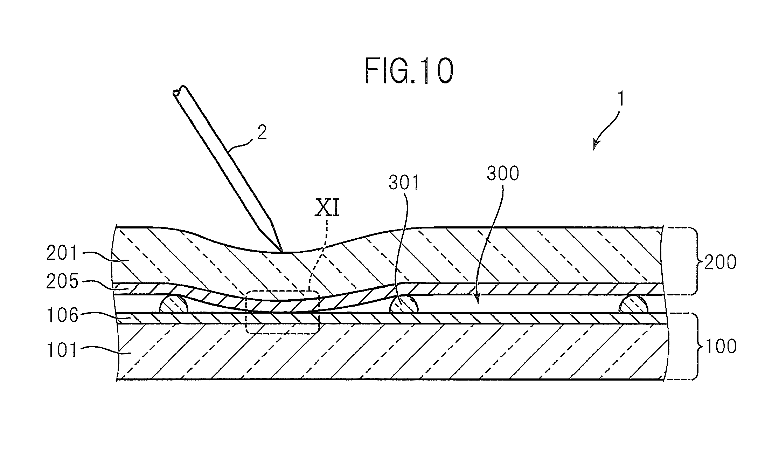

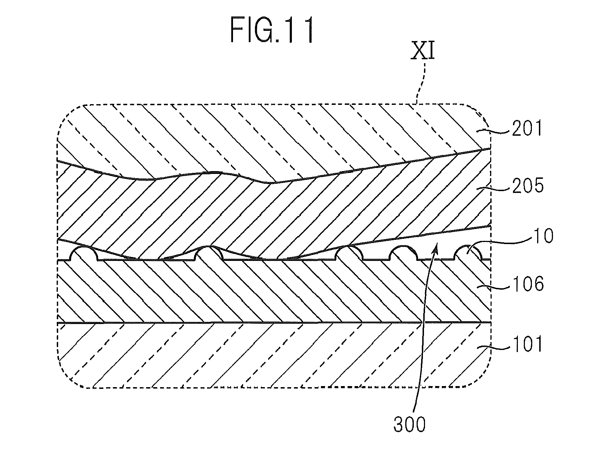

FIG. 10 is a partial cross-sectional view of the touch panel 1 according to the third embodiment when a surface of the touch panel is pressed down by a resin pen 2. FIG. 11 is a partial enlarged view of the XI region in FIG. 10.

In the touch panel 1 having a resistive system according to the third embodiment, when the surface of the second substrate 200 is pressed down by the resin pen 2, the second conductive film 205 is also pressed down on the side of the first substrate 100 and comes into contact with the first conductive film 106. As shown in FIG. 11, in a contact region between the first conductive film 106 and the second conductive film 205, the entire surface of the first conductive film 106 does not come into contact with the second conductive film 205 due to the presence of the convex portions 10, and an air layer 300 is formed in a part of the contact region. Due to the formation of the air layer 300, the first substrate 100 and the second substrate 200 do not adhere to each other, and therefore, the generation of Newton rings is suppressed.

Further, the manufacturing method of the touch panel 1 according to the third embodiment including the first substrate 100 provided with the first conductive film 106 composed of a plurality of wiring lines formed on a surface thereof facing the second substrate 200 and the second substrate 200 provided with the second conductive film 205 formed on a surface thereof facing the first substrate 100 may further include the steps of: applying the solution containing a silane coupling agent to the surface of the second substrate 200; and chemically bonding the silane coupling agent to the surface of the second substrate 200 to form the convex portions 10 each having a silicon oxide backbone and an organic functional group in the structure thereof.

In the case where the surface of the second substrate 200 is pressed down by the resin pen 2, in a contact region between the first conductive film 106 and the second conductive film 205, due to the formation of the convex portions 10 on each of the first substrate 100 and the second substrate 200, an air layer 300 is formed more as compared with the case where the convex portions 10 are formed only on the first substrate 100. Accordingly, the first substrate 100 and the second substrate 200 are further less likely to adhere to each other, and therefore, the generation of Newton rings is suppressed.

The touch panel 1 according to the third embodiment was integrated into a liquid crystal display device, and it was confirmed whether the quality of a display screen displayed by the display device was decreased. As a result, a decrease in the quality was not observed.

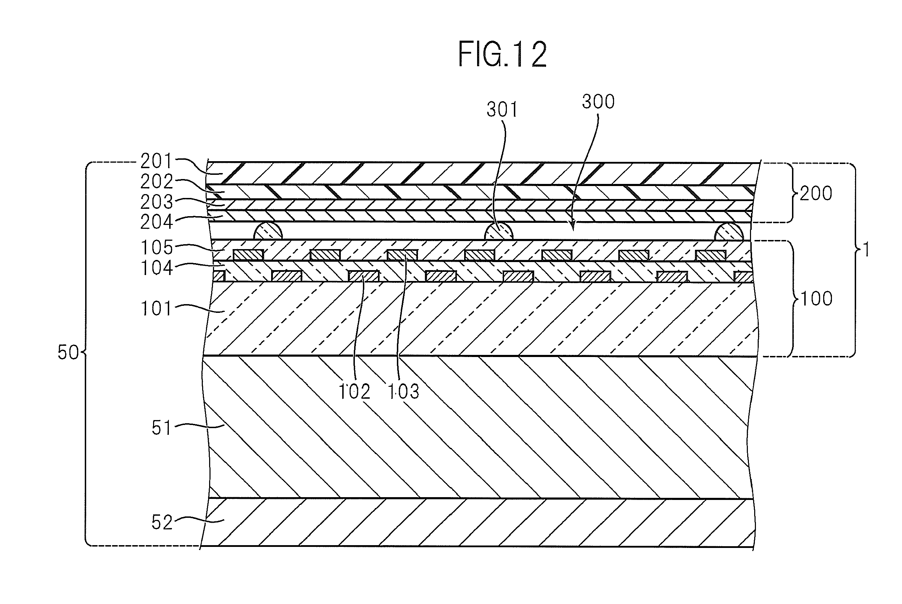

Here, an embodiment in which the touch panel 1 according to any of the first to third embodiments is integrated into a liquid crystal display device will be described. FIG. 12 is a partial cross-sectional view of a liquid crystal display device 50 using the touch panel 1 according to the first embodiment. As shown in FIG. 12, by disposing the touch panel 1 according to the first embodiment in a superimposed manner on the side of a display portion (on the side opposite to the side of a backlight 52 of a liquid crystal display panel 51) of a liquid crystal display panel 51 having a display function, the touch panel 1 according to the first embodiment can be used in the liquid crystal display device 50. Also the touch panels according to the second and third embodiments can be used in a liquid crystal display device in the same manner. Further, the touch panel 1 according to any of the first to third embodiments can be used also in an organic EL display device which is a light-emitting display device in place of a liquid crystal display device.

While there have been described what are at present considered to be certain embodiments of the invention, it will be understood that various modifications may be made thereto, and it is intended that the appended claim cover all such modifications as fall within the true spirit and scope of the invention.

## Claims

1. A manufacturing method of a touch panel, comprising the steps of:
preparing a solution containing a silane coupling agent;
applying the solution to a surface of a first substrate having a hydroxy group on the surface thereof:
chemically bonding the silane coupling agent to the surface of the first substrate to form convex portions each having a silicon oxide backbone and an organic functional group in the structure thereof; and
disposing a second substrate spaced apart from the first substrate to face the surface having the convex portions formed thereon of the first substrate.

2. The manufacturing method of a touch panel according to claim 1, wherein the first substrate is a glass substrate.

3. The manufacturing method of a touch panel according to claim 1, wherein the silane coupling agent is contained in the solution in an amount of from 0.1 to 0.01 wt%.

4. The manufacturing method of a touch panel according to claim 1, wherein
the first substrate is provided with a first electrode and a second electrode, each of which is composed of a plurality of wiring lines; and
the second substrate is provided with a dielectric film on the surface thereof facing the first substrate.

5. The manufacturing method of a touch panel according to claim 4, further comprising the steps of:
applying the solution containing a silane coupling agent to the surface of the dielectric film; and
chemically bonding the silane coupling agent to the surface of the dielectric film to form convex portions each having a silicon oxide backbone and an organic functional group in the structure thereof.

6. The manufacturing method of a touch panel according to claim 4, wherein the dielectric film has a resistance of from 10⁶ to 10¹² Ω.cm.

7. The manufacturing method of a touch panel according to claim 1, in which the first substrate is provided with a first conductive film composed of a plurality of wiring lines formed on the surface thereof facing the second substrate, and the second substrate is provided with a second conductive film formed on the surface thereof facing the first substrate, further comprising the steps of:
applying the solution containing a silane coupling agent to the surface of the second substrate; and
chemically bonding the silane coupling agent to the surface of the second substrate to form convex portions each having a silicon oxide backbone and an organic functional group in the structure thereof.

8. A touch panel comprising:
a first substrate having a hydroxy group on the surface thereof; and
a second substrate facing and spaced apart from the first substrate, wherein
the first substrate has convex portions each having a silicon oxide backbone and an organic functional group in the structure thereof formed by chemically bonding a silane coupling agent to the surface facing the second substrate of the first substrate.

9. The touch panel according to claim 8, wherein the first substrate is a glass substrate.

10. The touch panel according to claim 8, wherein
the first substrate is provided with a first electrode and a second electrode, each of which is composed of a plurality of wiring lines; and
the second substrate is provided with a dielectric film on the surface thereof facing the first substrate.

11. The touch panel according to claim 8, wherein
the first substrate is provided with a first conductive film composed of a plurality of wiring lines formed on the surface thereof facing the second substrate; and
the second substrate is provided with a second conductive film formed on the surface thereof facing the first substrate.

12. The touch panel according to claim 10, wherein the dielectric film has a resistance of from 10⁶ to 10¹² Ω.cm.
